Europäisches Patentamt

European Patent Office

Office européen des brevets

(11) Veröffentlichungsnummer: **0 507 169 A2**

# EUROPÄISCHE PATENTANMELDUNG

(21) Anmeldenummer: **92104968.0**

(22) Anmeldetag: **23.03.92**

(51) Int. Cl.5: **G01N 35/08**

(30) Priorität: **03.04.91 DE 4110735**

(43) Veröffentlichungstag der Anmeldung:
**07.10.92 Patentblatt 92/41**

(84) Benannte Vertragsstaaten:
**DE GB**

(71) Anmelder: **BODENSEEWERK PERKIN-ELMER GMBH**
**Askaniaweg 4**
**W-7770 Überlingen/Bodensee(DE)**

(72) Erfinder: **Sperling, Michael, Dr.**
**Am Leimacker 12**
**W-7767 Sipplingen(DE)**
Erfinder: **Tsalev, Dimiter L.**
**Borodinski Boy, Block 102**
**Sofia 1220(BG)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) **Probeneingabesystem mit integriertem Mikrowellenaufschluss.**

(57) Das Fließinjektionssystem enthält einen Mikrowellenofen mit einem Durchflußreaktor (L2), dessen Durchflußleitung in Windungen um einen Mikrowellen wenig absorbierenden Leitungsträger (1) gelegt ist. Die Windungen verlaufen nur mit einem Teil ihrer Länge und quer zur Bestrahlungsrichtung durch den Bestrahlungshohlraum des Mikrowellenofens (MWD). Dieser enthält programmierbare Einstellmittel für die Heizleistung und Heizdauer. In Verbindung mit einem Reduktionsdurchflußreaktor (L4) und einem Atomabsorptionsspektrometer wird so eine von Bindungszuständen unabhängige Bestimmung von Hydridbildnern und Quecksilber in einer Materialprobe möglich.

Fig. 2

## Technisches Gebiet

Die Erfindung betrifft ein System zum Aufschliessen von Proben und zur Probenaufgabe der aufgeschlossenen Proben in ein Analysengerät, enthaltend
(a) einen Mikrowellenofen mit einem Bestrahlungshohlraum und einem Durchflussreaktor, welcher einen Einlass und einen Auslass aufweist,
(b) Pumpenmittel zum Hindurchpumpen eines Gemisches von Probe und einem Aufschlussmittel durch den Durchflussreaktor
(c) wobei der Auslass des Durchflussreaktors an Probeneinlassmittel eines Analysengerätes anschliessbar ist.

## Zugrundeliegender Stand der Technik

Aus der DE-OS 39 17 840 der gleichen Anmelderin ist eine Anordnung zur Anreichung von Probensubstanz für spektroskopische Zwecke bei der Fliessinjektionsanalyse bekannt, bei der eine Ionenaustauschersäule für die Anreicherung verwendet wird. Die Fliessinjektionsmittel dienen darin dazu, die Probensubstanz auf die Ionenaustauchersäule zu bringen und von dieser in angereicherter Form zu eluieren und Probenaufgabemitteln in Form einer Dosierkapillare zuzuführen. Durch die Dosierkapillare wird die angereicherte Probe in einen rohrförmigen Ofen eines Atomabsorptionsspektrometers gegeben.

Bei dieser Anordnung findet die Fliessinjektion lediglich für die Anreicherung und Aufgabe der Probe Anwendung. Eine weitere Probenbehandlung, insbesondere ein Probenaufschluss ist dabei nicht vorgesehen.

Weiterhin sind zahlreiche Anordnungen zur Verwendung bei der Fliessinjektions-Analyse bekannt. So zeigt die DE-OS 38 42 315 eine Ionen-Austauscher-Säule, die DE-OS 38 33 248 eine Vorrichtung zum Einbringen eines definierten Probenvolumens, die Veröffentlichung von JAROMIR RUDZICKER "HOMOGENEOUS AND HETEROGENEOUS SYSTEMS Flow Injection Analysis Today and Tomorrow, in: Analytica Chemica Acta, 214 (1988) S. 1 - 27, eine Pumpenanordnung zum Zumischen, die DE-PS 36 06 938 eine Membranzugabevorrichtung, die DE-PS 28 42 864 eine Vorrichtung zur Fliessextraktion, bei der eine Substanz in einer ersten Lösungsmittelphase gelöst und mit einer zweiten Lösungsmittelphase, die mit der ersten Phase unmischbar ist, extrahiert wird und das DE-Gbm 90 13 193 den modularen Aufbau eines Fliessinjektions-Analysesystems.

Aus der GB 20 99 579A ist es bekannt, bei Fliessinjektionssystem Bauteile zu verwenden, die aus Polytetrafluorethylen bestehen. Aus dem Aufsatz "Die Fliessinjektionsanalyse (FIA) in der Atomspektrometrie" in: Nachrichten chemische Technik LAB. 39 Nr. 3, 1991, S. 310 - 315 ist es bekannt, bei der Fliessinjektionsanalyse als Analysengeräte Atomspektrometer, Atomabsorptionsspektrometer (AAS) und Flammen-Atomabsorptionsspektrometer zu verwenden. Aus der EP 0 212 241 A2 ist es bekannt, gebildete flüchtige Hydride wahlweise auf ein Plasma-Emissionsgerät oder eine beheizte Messküvette für die Atomabsorptions-Spektroskopie zu leiten. Hierzu ist weiterhin die Veröffentlichung von MASASHI GOT et al. "Continuous micro flow monitoring method for total mercury at sub-ppb level in wastewater and other waters using cold vapor atomic absorption spectrometry" in: Fresenius Z Anal Chem, Jg. 332, 1988, S. 745 - 749 zu nennen. Die Verwendung von Atomabsorptionsspektrometern als Analysegeräte bei Fliessinjektionssystemen ist auch aus der Veröffentlichung von BACKSTRÖM, Kenneth und DANIELSSON, Lars-Göran: "Sample Work-up for Graphite Furnace Atomicabsorption Spectrometry Using Continuous Flow Extraction" in: Analyst, Vol.109, March 1984, S. 323 - 325 bekannt. Die Verwendung von Aerosol-Abscheidern im Inert-Gasstrom und von Quecksilber Adsorbern ist aus MERTENS, H. und ALTHAUS, A. "Bestimmung von Quecksilber mit Hilfe der Amalgamtechnik unter Verwendung von Hydroxylammoniumchlorid und Natriumborhydrid oder Zinn(II)-chlorid" in: Fresenius Z Anal Chem, H. 7, 1983, S. 696 - 698 bekannt. Weiterhin sind zum obenstehenden Angaben enthalten in der DE-OS 39 17 956, der DE-OS 35 03 315 und der US-PS 48 16 226.

Schon seit einiger Zeit ist es bekannt, in der analytischen Technik zum Probenaufschluss Mikrowellenöfen zu verwenden. So beschreibt die US-PS 49 46 797 die Verwendung eines Mikrowellenofens für den nassen Aufschluss bei der Stickstoffbestimmung nach Kjedahl. Aus JP 1-308940 A in: Patents Abstracts of Japan P 1014, Feb. 28, 1990, Vol. 14 No. 11 ist es bekannt, bei der Gas- oder Flüssigkeitschromatographie einen Mikrowellenofen zur Behandlung eines Gemisches zu verwenden, das vorher mit Ultraschall behandelt wurde.

Aus der Veröffentlichung von M. Burguera und J.L. Burguera in Analytica Chimica Acta 179 (1986), Seiten 351 bis 357 unter dem Titel "Flow injection and microwave-oven sample decomposition for determination of copper, zinc and iron in whole blood by atomic absorption spectroscopy" ist bekannt, in Verbindung mit der Fliessinjektion einen Mikrowellenofen zu verwenden, um eine Probe für die nachfolgende Messung der Atomabsorption aufzuschliessen. Dazu enthält das Fliessinjektionssystem ein Doppelventil, mit dem eine Blutprobe und ein Aufschlussmittel, nämlich ein Gemisch von Salzsäure und Salpetersäure, in getrennte Trägerflüssigkeitsströme eingegeben werden, die am Eingang eines Durchflussreaktors im Mikrowellenofen zusammengeführt werden. Der Mikrowellenofen ist ein normales Haushaltsgerät, und der Durchflussreaktor bildet eine zu einer Spule gewickelte Rohrleitung aus Pyrex, die in dem Bestrahlungshohlraum des Mikrowellenofens angeordnet ist. Nach Durchgang durch den Durchflussreaktor wurde die aufgeschlossene Probe in den Zerstäuber des Atomabsorptionsspektrometers eingeführt.

In dieser Veröffentlichung wird angegeben, dass die Volumina der Probe und des Aufschlussmittels wie auch die Länge des Pyrexrohres und die Fliessgeschwindigkeit so eingestellt werden müssen, dass die Verweilzeit im Mikrowellenofen einerseits ausreichend für den vollständigen Aufschluss der Probe ist, aber andererseits nicht ausreicht, um eine Verdampfung oder Gasblasenbildung in der Flüssigkeit im Durchflussreaktor zu bewirken. Eine solche Gasblasenbildung beeinträchtigt die Fliessinjektionsanalyse, da sie zu einer unerwünschten Dispersion, d.h. Vermischung der Probe mit der Trägerflüssigkeit führt.

In einer Veröffentlichung von S. Hinkamp und G. Schwedt in Analytica Chimica Acta 236 (1990), Seiten 345 bis 350, unter dem Titel "Determination of total phosphorus in waters with amperometric detection by coupling of flow-injection analysis with continuous microwave oven digestion" ist ein Mikrowellenofen in Verbindung mit einem Durchflussreaktor beschrieben. Der Durchflussreaktor besteht aus einer zur Spule gewickelten Rohrleitung aus Polytetrafluorethylen, an deren Eingangsseite ein Trägerflüssigkeitsstrom, der phosphathaltige Wasserproben enthält, mit einem Aufschlussmittelstrom zusammengeführt wird. Das Aufschlussmittel besteht hier aus einer Lösung von Perexodisulfat oder Perchlorsäure, durch die alle Phosphate beim pH der Trägerflüssigkeit in die gleiche Orthophosphatlösung übergeführt werden. Der Mikrowellenofen, der ebenfalls ein Haushaltgerät bildet, enthält weiterhin eine Wasserkühlung.

Anschliessend an die Umsetzung im Durchflussreaktor passiert der Trägerflüssigkeitsstrom eine Gasdiffusionszelle, in der Gasblasen aus der Trägerflüssigkeit entfernt werden. Danach wird der Trägerflüssigkeitsstrom mit der aufgeschlossenen Probe mit einem Reagensstrom (saure Ammoniummolybdatlösung) zusammengeführt und gelangt nach Durchtritt durch einen weiteren Durchflussreaktor in die elektrochemische Messzelle, in der das gebildete Molybdänblau amperometrisch reduziert und dadurch der Phosphatgehalt der Probe bestimmt wird.

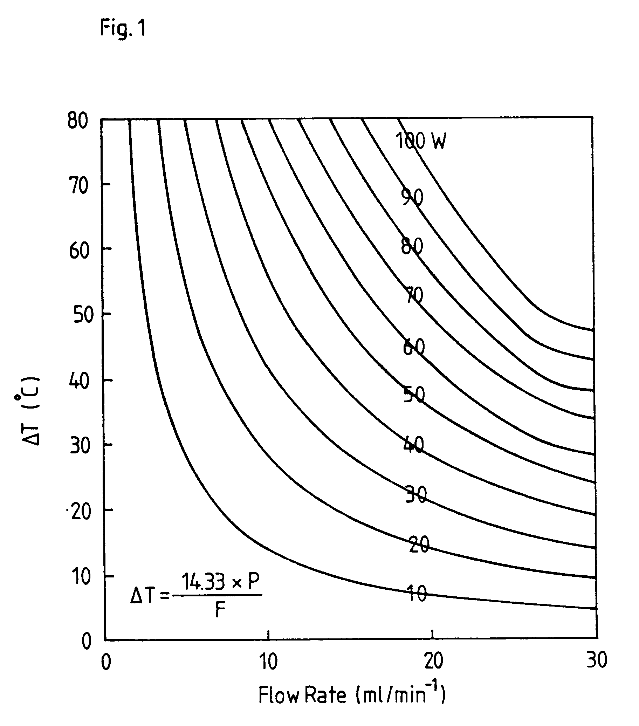

Mikrowellenöfen, wie sie als Haushaltsgeräte Verwendung finden, haben in bezug auf die bei der Fliessinjektionsanalyse zu erwärmenden Flüssigkeitsmengen verhältnismässig hohe Leistungen. Aus diesem Grunde müssen bei den bekannten Verfahren bestimmte Bedingungen hinsichtlich der Leitungsdurchmesser und der Fliessgeschwindigkeit eingehalten werden, um eine Überhitzung zu vermeiden, und andererseits Massnahmen getroffen werden, die einen Trockenlauf des Mikrowellenofens zu verhindern. Wie sich aus der Darstellung in Fig. 1 ergibt, genügen zur Erwärmung der Flüssigkeiten im Mikrowellenofen auf die gewünschte Aufschlusstemperatur sehr geringe Mikrowellenleistungen. In Fig. 1 ist die erreichbare Flüssigkeitstemperatur in Form des Temperaturunterschieds T gegenüber Raumtemperatur als Funktion der Fliessgeschwindigkeit und der eingestrahlten Mlkrowellenleistung aufgetragen. Man erkennt, dass nur geringe Bruchteile der Gesamtleistung, die bei einem Haushaltsgerät bei 650 W liegt, benötigt werden, um die gewünschte Aufschlusstemperatur zu erreichen. Gleichzeitig besteht aber auch das Problem, dass Aufschlussreaktionen auch bei höheren Temperaturen gewisse Mindestzeiten benötigen, um den gewünschten Aufschluss mit Sicherheit vollständig zu machen, da andernfalls das Analysenergebnis verfälscht wird. Diese Probleme werden zusätzlich dadurch kompliziert, dass die erforderlichen Aufschlusstemperaturen und Aufschlusszeiten von der Matrix abhängen, die das zu bestimmende Element enthält. Insgesamt ist so eine hohe Variabilität in der Einstellung der Aufschlussbedingungen erforderlich, da die Aufschlussbedingungen von Probe zu Probe variieren.

**Offenbarung der Erfindung**

Die Aufgabe der Erfindung besteht dementsprechend darin, ein Fliessinjektionssystem der eingangs genannten Art zu schaffen, bei dem eine Überhitzung des Flüssigkeitsstroms im Durchflussreaktor sicher vermieden und die erforderliche Anpassung an die unterschiedlichsten Aufschlussbedingungen ermöglicht wird.

Erfindungsgemäss wird diese Aufgabe bei einem System der eingangs definierten Art dadurch gelöst , dass

(d) der Durchflussreaktor einen Leitungsträger und eine daran vorgesehene Durchflussleitung aufweist, und

(e) diese Durchflussleitung einen ersten Bereich aufweist, der in den Bestrahlungshohlraum ragt und einen zweiten Bereich, der ausserhalb des Bestrahlungshohlraumes liegt.

Auf diese Weise bleibt die strömende Flüssigkeit während einer Verweilzeit in dem Mikrowellenofen, die für einen vollständigen Aufschluss ausreicht, ohne jedoch der Gefahr einer Überhitzung und der Bildung von Dampf- und Gasblasen ausgesetzt zu sein. Das liegt daran, dass die Flüssigkeit nicht für die gesamte Verweilzeit in dem Bestrahlungshohlraum des Mikrowellenofens verbleibt.

Vorzugsweise bildet die Durchflussleitung eine Leitungswicklung um den Leitungsträger herum.

Das System kann weiterhin eine Ballast-Leitungswicklung enthalten, die zusätzlich zu dem Durchflussreaktor in dem Bestrahlungshohlraum angeordnet ist, und Pumpenmittel zum Hindurchpumpen einer mikrowellenabsorbierenden Flüssigkeit durch die Ballast-Leitungswicklung.

Auf diese Weise wird ein "thermischer Ballast" vorgesehen, der einen erheblichen Teil der erzeugten Mikrowellenenergie absorbiert und dadurch ein "Trockenlaufen" des Mikrowellenofens verhindert.

Vorzugsweise bestrahlt ein Bündel von Mikrowellenstrahlung in dem besagten Mikrowellenofen den Bestrahlungshohlraum im wesentlichen längs einer ersten Achse. Die Leitungswicklung des Durchflussreaktors ist um eine Achse gewickelt, die parallel zu der ersten Achse ist, wodurch die Leitung dieser Leitungswicklung im wesentlichen quer zu der ersten Achse verläuft.

Da sich die Leitung quer zu dem Bündel von Mikrowellenstrahlung erstreckt, absorbiert die Flüssigkeitsströmung beim Durchgang durch den Bestrahlungshohlraum vergleichsweise wenig Mikrowellenenergie.

Im Gegensatz dazu ist die Ballast-Leitungswicklung um eine zweite Achse gewickelt, die senkrecht zu der ersten Achse verläuft, wodurch sich der überwiegende Teil der Ballast-Leitungswicklung längs des Bündels von Mikrowellenstrahlung erstreckt.

Auf diese Weise ist im wesentlichen die gesamte Länge der Ballast-Leitungswicklung innerhalb des Bündels von Mikrowellenstrahlung angeordnet.

Der Mikrowellenofen kann bei dem erfindungsgemässen System einfach an ganz verschiedene Aufschlussbedingungen angepasst werden, ohne dass die Gefahr einer Bildung von Dampf- oder Gasblasen infolge von Überhitzung der Flüssigkeitsströmung besteht. Vorzugsweise ist der Mikrowellenofen mit programmierbaren Einstellmitteln zur Einstellung der Heizleistung und Heizdauer versehen.

Das System kann Fliessinjektionsmittel enthalten zum Injizieren von Probenflüssigkeit in eine Strömung von Trägerflüssigkeit, wobei diese Strömung von Trägerflüssigkeit durch die Pumpenmittel durch den Durchflussreaktor hindurchgepumpt wird.

Mit besonderem Vorteil kann das erfindungsgemässe System in Verbindung mit einem Atomabsorptions-Spektrometer zur Bestimmung von Elementen benutzt werden, die flüchtige Hydride bilden, oder zur Bestimmung von Quecksilber.

Zu diesem Zweck enthält das System weiterhin

(a) einen Reduktions-Durchflussreaktor mit einem Einlass und einem Auslass, wobei der Einlass des Reduktions-Durchflussreaktors mit dem Auslass des Durchflussreaktors im Mikrowellenofen in Verbindung steht, und

(b) Mittel zur Zuführung eines Reduktionsmittels zu dem Einlass des Reduktions-Durchflussreaktors, wobei der Auslass des Reduktions-Durchflussreaktors mit Probeneinlassmitteln des Atom-Spektrometers verbindbar ist.

Vorzugsweise sind Mittel zum Zuführen eines Inertgasstromes zu dem Reduktions-Durchflussreaktor vorgesehen, und ein zwischen dem Auslass des Reduktions-Durchflussreaktors und die Probeneinlassmittel eingeschalteten Aerosolabscheider.

Zur Bestimmung von Quecksilber enthält das System weiterhin einen Quecksilberadsorber, der zwischen den Aerosolabscheider und die Probeneinlassmittel eingeschaltet ist.

Der Reduktions-Durchflussreaktor ist mit einer Inertgasquelle verbunden. Das Inertgas soll die flüchtigen Hydride oder den Quecksilberdampf mitnehmen. Der Auslass des Reduktions-Durchflussreaktors ist mit dem Aerosolabscheider verbunden, wodurch die Gase von der Flüssigkeit getrennt und z.B. dem Atomabsorptions-Spektrometer zugeführt werden.

Eine bevorzugte konstruktive Ausführung besteht darin, dass der Leitungsträger ein langgestreckter Körper ist, der sich längs einer zweiten Achse senkrecht zu der ersten Achse erstreckt, und die Leitungswicklung in Längsrichtung auf diesen langgestreckten Körper aufgewickelt ist, wodurch der überwiegende Teil der Durchflussleitung parallel zu der zweiten Achse verläuft. Zu diesem Zweck ist vorgesehen, dass

(a) der langgestreckte Leitungsträger senkrecht zu der zweiten Achse einen allgemein rechteckigen Querschnitt aufweist,

(b) der Leitungsträger längs der zweiten Achse einen Abschnitt aufweist, in welchem der Querschnitt verringerte Abmessungen besitzt,

(c) die in Längsrichtung verlaufende Leitungswicklung des Durchflussreaktors den Abschnitt mit verringerten Abmessungen überbrückt und

(d) die Ballast-Leitungswicklung um diesen Abschnitt mit verringerten Abmessungen innerhalb der Leitungswicklung des Durchflussreaktors herumgewickelt ist.

Insgesamt kann der Mikrowellenofen bei dem erfindungsgemässen Fliessinjektionssystem ohne weiteres an die unterschiedlichsten Aufschlussbedingungen angepasst werden, ohne dass die Gefahr einer Dampf- oder Gasblasenbildung durch Überhitzung des Flüssigkeitsstroms und der dadurch verursachten unzulässigen Dispersion der Probe im Trägerflüssigkeitsstrom besteht. Der Mikrowellenofen ist daher vorzugsweise mit programmierbaren Einstellmitteln für die Heizleistung und die Heizdauer versehen.

Das erfindungsgemässe Fliessinjektionssystem kann mit besonderem Vorteil in Verbindung mit einem Atomabsorptionsspektrometer zum Nachweis von Elementen, die flüchtig Hydride bilden, und Quecksilber eingesetzt werden. Ein so modifiziertes Fliessinjektionssystem zeichnet sich dadurch aus, dass der weitere Durchflussreaktor ein Reduktionsdurchflussreaktor ist, in dem in der aufgeschlossenen Probe im Trägerflüssigkeitsstrom enthaltene Hydridbildner und Quecksilberverbindungen mit einem Reduktionsmittel zu flüchten Hydriden bzw. Quecksilber umgesetzt werden, dass der Reduktionsdurchflussreaktor eingangsseitig an eine Inertgasquelle angeschlossen ist, um gebildetes flüchtiges Hydrid bzw. Quecksilber in einen Inertgasstrom aufzunehmen, und dass der Reduktionsdurchflussreaktor ausgangsseitig an einen Gas-Flüssigkeitsseparator angeschlossen ist, in dem der Inertgasstrom von dem Trägerflüssigkeitsstrom getrennt wird und der mit den Probenaufgabemitteln für das Atomabsorptionsspektrometer verbunden ist.

In dieser Kombination tritt der Trägerflüssigkeitsstrom, der die aufgeschlossene und reduzierte Probe enthält, mit vergleichsweise hoher Temperatur in den Gas-Flüssigkeitsseparator ein. Dadurch wird eine besonders effektive Abtrennung der gasförmigen Produkte vom Trägerflüssigkeitsstrom erreicht, wodurch die analytische Empfindlichkeit verbessert wird, zumindest aber eine durch die Erwärmung im Mikrowellenofen und den zusätzlichen Durchlauf durch den Reduktionsdurchflussreaktor gegebenenfalls verursachte weitergehende Dispersion der Probe im Trägerflüssigkeitsstrom kompensiert werden kann.

## Kurze Beschreibung der Zeichnungen

Ausführungsbeispiele der Erfindung sind in den Abbildungen dargestellt und werden nachfolgend im einzelnen anhand der Bezugszeichen erläutert und beschrieben. Es zeigen

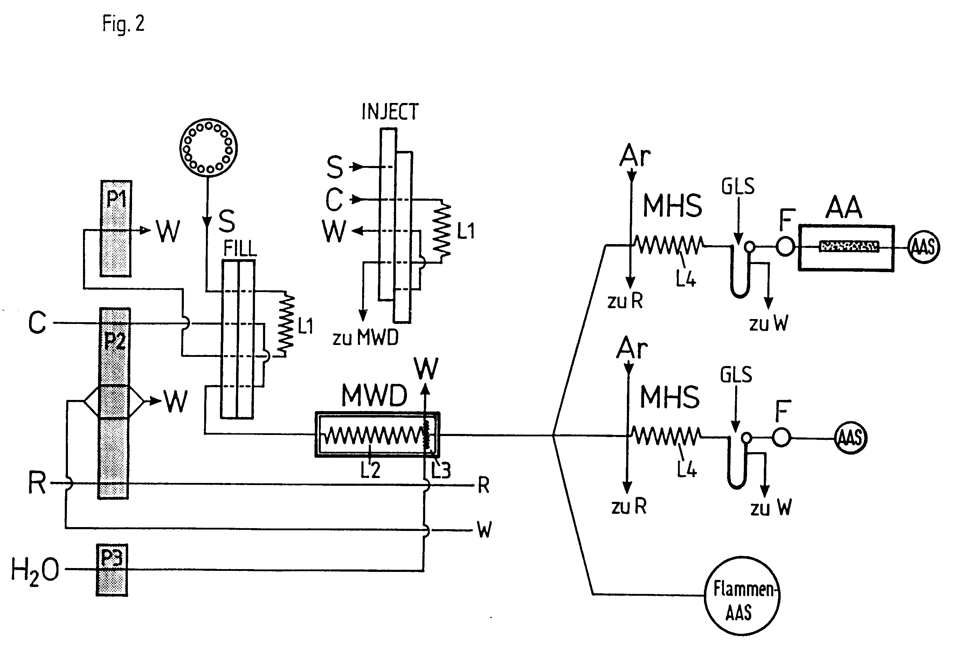

Fig. 1
ein schematisches Diagramm, in dem die Temperaturerhöhung eines Flüssigkeitsstroms in einem Mikrowellenofen als Funktion der Fliessgeschwindigkeit und der Mikrowellenleistung dargestellt sind;
Fig. 2
eine schematische Darstellung des erfindungsgemässen Fliessinjektionssystems in Verbindung mit einem Atormabsorptionsspektrometer;
Fig. 3A und 3B
einen Längsschnitt bzw. Querschnitt durch den Durchflussreaktor bei dem Fliessinjektionssystem nach Fig. 2

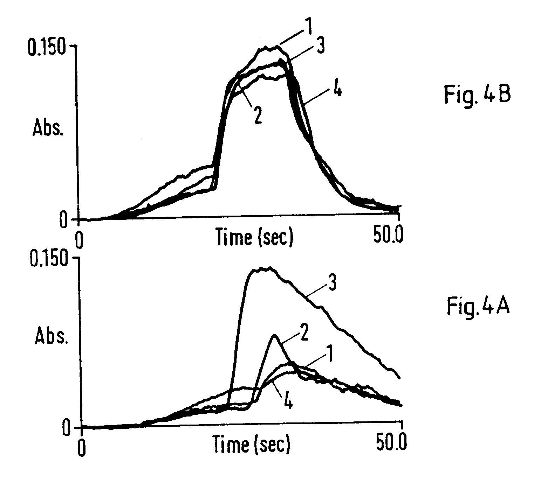

Fig. 4A
nach dem Hydridverfahren erhaltene Messkurven der Atomabsorption von vier Arsenverbindungen mit unterschiedlichen Bindungszuständen des Arsens; und
Fig. 4B
unter Verwendung des Fliessinjektionssystems nach Fig. 2 erhaltene Messkurven der vier Arsenverbindungen nach Fig. 4

## Bevorzugte Ausführungsformen der Erfindung

In der linken Hälfte der Fig. 2 ist schematisch ein Fliessinjektionssystem dargestellt, das aus konventionellen Komponenten besteht und in Kombination mit verschiedensten Analysengeräten verwedent werden kann. In das System ist ein Mikrowellenofen MWD zum Probenaufschluss integriert.

Dem Fliessinjektionssystem ist ein Autosampler S üblicher Bauart, zum Beispiel ein Perkin-Elmer AS-90 Autosampler zugeordnet, in dem Probengefässe für die zu analysierenden Proben beispielsweise auf einem Drehtisch kranzförmig angeordnet sind. Weiterhin ist das Fliessinjektionssystem mit einer Pumpenanordnung zur Förderung der verschiedenen Flüssigkeiten versehen. Eine Pumpe P1 dieser Pumpenanordnung wirkt mit einem Probeninjektionsventil mit einer Probenschleife L1 in der Weise zusammen, dass die Probenschleife L1 mit Probenflüssigkeit aus dem jeweils anstehenden Probengefäss gefüllt wird. Die zugehörige Leitung führt zu einem Abfallgefäss W.

Eine Pumpe P2 der Pumpenanordnung ist eingangsseitig mit einem Vorrat einer Trägerflüssigkeit und ausgangsseitig mit einer Leitung L verbunden, die zu dem Mikrowellenofen MWD führt und in die das Probeninjektionsventil eingebaut ist. Die Leitung L führt zum Durchflussreaktor des Mikrowellenofen MWD und durch diesen hindurch letztlich ebenfalls zu dem Abfallgefäss W. Durch die Pumpe P2 wird die Trägerflüssigkeit durch die Leitung L gefördert. Bei Betätigung des Probeninjektionsventils wird das in der Probenschleife L1 enthaltene, abgemessene Probenvolumen in den Trägerflüssigkeitsstrom injiziert und mit diesem in den Mikrowellenofen MWD gefördert.

In dem dargestellten Ausführungsbeispiel ist die in dem Probengefäß des Autosamplers S enthaltene Probe bereits mit einem geeigneten Aufschlußmittel versetzt, so daß die in den Trägerflüssigkeitsstrom injizierte Probe mit dem Aufschlußmittel zusammen durch die Leitung L gefördert wird. Es können stattdessen aber auch ähnlich wie in der eingangs genannten Veröffentlichung von Burgurea et al. die Pumpe P2 und das Probeninjektionsventil als Doppelelemente konstruiert sein, die das Aufschlußmittel und die Probe getrennt in zwei Trägerflüssigkeitsströme injizieren, die vor dem Eintritt in den Mikrowellenofen MWD in der Leitung L vereinigt werden. Im Endeffekt werden dabei ebenfalls das Aufschlußmittel und die Probe gemeinsam in den Mikrowellenofen MWD eingebracht.

Der Mikrowellenofen MWD enthält einen eingangsseitig an die Leitung L angeschlossenen Durchflußreaktor L2. Weiterhin ist in dem Mikrowellenofen MWD ein "thermischer Ballast" vorgesehen, der den Hauptteil der eingestrahlten Mikrowellenenergie aufnimmt und abführt und verhindert, daß es zu einem Trockenlauf des Mikrowellenofens MWD kommt, falls die Zufuhr der Trägerflüssigkeit durch den Durchflußreaktor L2 ausbleibt oder die gesamte Trägerflüssigkeit verdampfen sollte. In dem dargestellten Ausführungsbeispiel wird dieser thermische Ballast von einer Leitungsspule L3 gebildet, durch die mittels einer weiteren Pumpe P3 der Pumpenanordnung Wasser gepumpt wird, das ebenfalls dem Abfallgefäß W zugeführt wird. Anstelle von Wasser kann auch ein anderes, Mikrowellen stark absorbierendes Medium von der Pumpe P3 durch diese Leitungsspule L3 gefördert werden.

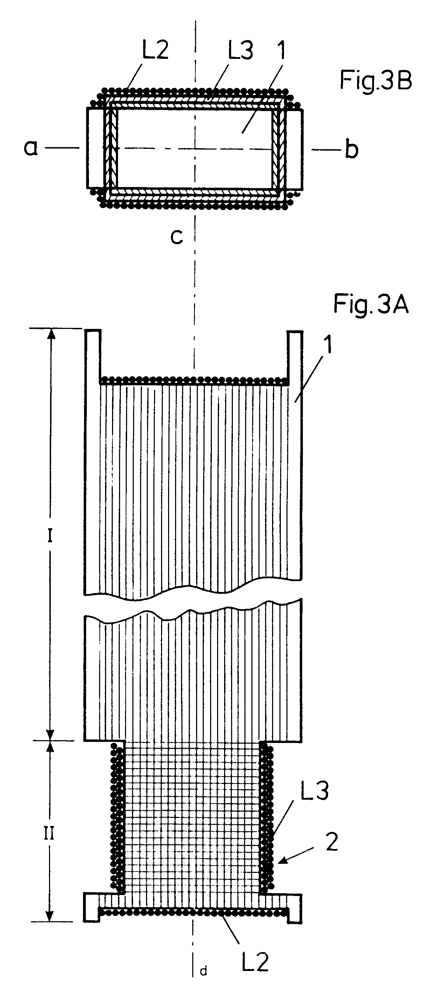

Die Anordnung des Durchflußreaktors L2 und der Leitungsspule L3 des Mikrowellenofens ist im einzelnen in Figur 3A im Längsschnitt und in Figur 3B im Querschnitt dargestellt. Der Mikrowellenofen MWD enthält einen länglichen Leitungsträger 1 aus Mikrowellen nur wenig absorbierendem Material, zum Beispiel Polytetrafluorethylen. Dieser Leitungsträger 1 erstreckt sich nur mit einem Teil seiner Länge, nämlich einem Endteil mit einer Verengung 2, in den Bestrahlungshohlraum des Mikrowellenofens MWD, während ein größerer Teil seiner Länge außerhalb dieses Bestrahlungshohlraumes angeordnet ist. Der Durchflußreaktor L2 bildet eine Durchflußleitung, die mit einer Anzahl von Windungen in Längsrichtung um den länglichen Leitungsträger 1 gewickelt ist. In dem dargestellten Ausführungsbeispiel bildet der Durchflußreaktor L2 eine einlagige Wicklung einer Schlauchleitung. Jede Windung dieser Wicklung befindet sich somit nur mit dem Teil ihrer Länge, der im Bereich der Verengung 2 angebracht ist, im Bestrahlungshohlraum des Mikrowellenofens MWD.

Die Verengung 2 des Kerns 1 ist mit einer Vielzahl von Windungen der Leitungsspule L3 versehen; in dem dargestellten Ausführungsbeispiel sind die Windungen zweilagig in Querrichtung um die Verengung 2 gewickelt. Die Windungen der Leitungsspule L3 und die Windungen des Durchflußreaktors L2 verlaufen somit in zueinander senkrechten Ebenen, und nur die Windungen der Leitungsspule L3 befinden sich mit ihrer vollen Länge im Bestrahlungshohlraum des Mikrowellenofens MWD.

In der Querschnittdarstellung von Figur 3B erkennt man, daß der Leitungsträger 1 rechteckigen Querschnitt besitzt; Aus Gründen der besseren übersichtlichkeit sind hier die Lagen der Windungen der Leitungsspule L3 nur schraffiert gezeichnet. Mit a-b ist in dieser Figur die Bestrahlungsrichtung im Bestrahlungshohlraum des Mikrowellenofens MWD angedeutet. Es geht aus dieser Darstellung unmittelbar hervor, daß die Windungen der Leitungsspule L3 in der Bestrahlungsrichtung verlaufen, so daß das Mikrowellen stark absorbierende Medium, das durch die Leitungsspule L3 fließt, über die ganze Länge der Windungen den Mikrowellen ausgesetzt ist. Es ist ebenfalls erkennbar, daß die Windungen des Durchflußreaktors L2 nur über den Teil ihrer Länge, der sich in Längsrichtung des Leitungsträgers 1 über die Verengung 2 erstreckt, den Mikrowellen ausgesetzt sind und quer zur Bestrahlungsrichtung a-b in der Richtung c-d verlaufen.

Es ergibt sich so, daß die Flüssigkeit beim Durchtritt durch die Windungen des Durchflußreaktors L2 nur intermittierend durch die Mikrowellenbestrahlung erwärmt wird, so daß auch bei langer Verweilzeit keine Überhitzung unter Dampf- oder Gasblasenbildung eintritt. Hingegen befindet sich das Mikrowellen stark absorbierende Medium in den Windungen der Leitungsspule L3 während der gesamten Verweilzeit im Bestrahlungshohlraum des Mikrowellenofens und ist somit ständig der Erwärmung durch die Mikrowellen ausgesetzt. Durch diese Anordnung wird die gewünschte Funktion als thermischer Ballast in hervorragender Weise erfüllt.

Der Leitungsträger 1 mit dem Durchflußreaktor L2 und der Leitungsspule L3 sind mit üblichen Mitteln am Gehäuse des Mikrowellenofens MWD gehaltert, und es sind Standardanschlußmittel zur eingangs- und ausgangsseitigen Verbindung des Durchflußreaktors L2 und der Leitungsspule L3 mit den jeweiligen Leitungen vorgesehen. In dem Ausführungsbeispiel ist der Mikrowellenofen MWD und eine MX 350 Maxidigest Mikrowellenstation der Firma Prolabo, die mit programmierbaren Einstellmitteln (TX 31 Maxidigest Programmer) ausgerüstet ist, die eine Einstellung der Betriebsbedingungen insbesondere hinsichtlich der Heizleistung und Heizdauer in Anpassung an die jeweiligen Aufschlußerfordernisse ermöglichen.

Nach Durchtritt durch den Mikrowellenofen MWD kann der Trägerflüssigkeitsstrom mit der aufgeschlossenen Probe den Probenaufgabemitteln des jeweiligen Analysengerätes zugeführt werden. Das Analysengerät kann beispielsweise ein Atomspektrometer wie ein Atomemissionsspektrometer sein, aber auch ein Atomabsorptionsspektrometer wie das in der eingangs erwähnten Veröffentlichung von Burgurea et al. beschriebene Flammenatomabsorptionsspektrometer, wobei der Flüssigkeitsstrom unmittelbar dem Zerstäuber des Gerätes zugeführt wird.

In einer bevorzugten Ausführung wird das vorstehend beschriebene Fließinjektionssystem mit einem Atomabsorptionsspektrometer AAS betrieben, das zur Bestimmung von Quecksilber oder Hydridbildnern ausgebildet ist, also von flüchtigen Elementen oder solchen, die flüchtige Hydride bilden. Dazu ist das Atomabsorptionsspektrometer AAS beispielsweise mit einer Quarzküvette versehen, in der die Atomabsorption des elementaren Quecksilbers gemessen wird oder die beheizbar ist, um die durch die Probenaufgabemittel in die Quarzküvette eingebrachten Hydride thermisch zu zersetzen und die Atomabsorption der jeweiligen Elemente zu messen, zum Beispiel Zinn, Blei, Arsen, Antimon, Wismut, Selen oder Tellur.

Für diesen Zweck ist es notwendig, die vorgenannten Elemente nach dem Probenaufschluß in die flüchtige Form umzuwandeln und in einen Inertgasstrom aufzunehmen. Dazu dient die rechte Hälfte der in Figur 2 schematisch dargestellten Anordnung. Die Komponenten dieses Teils des Fließinjektionssystems sind als solche bekannt und brauchen daher nicht im einzelnen beschrieben zu werden.

Die Pumpe P2 der Pumpenanordnung enthält zusätzlich Pumpenmittel, durch die ein Reduktionsmittel wie beispielsweise eine wässrige Lösung von Natriumtetrahydridoborat durch eine Leitung R zu einem Reduktionsdurchflußreaktor L4 gefördert wird. Die Leitung R mündet in die Ausgangsleitung, die vom Durchflußreaktor L2 ausgeht und zu dem Reduktionsdurchflußreaktor L4 führt. Dabei ist die Zufuhr des Reduktionsmitteln unter Berücksichtigung von unverbrauchtem Aufschlußmittel zu bemessen, das in der aufgeschlossenen Probe noch vorhanden ist. Zusätzlich tritt in bekannter Weise ein Inertgasstrom Ar in den Flüssigkeitsstrom ein, der die aufgeschlossene Probe enthält. Beim Durchgang durch den Reduktionsdurchflußreaktor L4 erfolgt die Umsetzung der aufgeschlossenen Probe mit dem Reduktionsmittel unter Bildung der gasförmigen Produkte, die dann von dem Inertgasstrom Ar aufgenommen werden.

Dem Reduktionsdurchflußreaktor L4 folgt in Strömungsrichtung ein Gas-Flüssigkeitsseparator GLS bekannter Konstruktion, in dem der Flüssigkeitsstrom von dem Inertgasstrom getrennt und unter der Wirkung der Pumpe P2 dem Abfallgefäß W zugeführt wird. Dieser Gas-Flüssigkeitsseparator GLS ist gefolgt von einem Aerosolabscheider F bekannter Bauart.

Der so abgetrennte Inertgasstrom wird im Falle der Hydridanalyse bekannten Probenaufgabemitteln für die beheizbare Quarzküvette des Atomabsorptionsspektrometers AAS zugeführt. Im Falle der Quecksilberbestimmung wird der Inertgasstrom über einen an sich bekannten Quecksilberadsorber geleitet, durch den das Quecksilber beispielsweise als Amalgam gebunden wird und aus dem das Quecksilber anschließend durch Ausheizen in einem Inertgasstrom ausgetrieben und mit bekannten Probenaufgabemitteln dem Atomabsorptionsspektrometer AAS zugeführt wird.

Es hat sich herausgestellt, daß trotz der Länge der Fließwege und trotz des Durchlaufs durch die zwei Durchflußreaktoren L2 und L4 die Empfindlichkeit der Messung der Atomabsorption der Hydridbildner und des Quecksilbers nicht beeinträchtigt wird, obwohl die Dispersion, d.h. die Vermischung der Probe mit der Trägerflüssigkeit durch die vorgenannten Umstände an sich begünstigt wird. Es wird vermutet, daß diese negativen Wirkungen dadurch kompensiert werden, daß die aus dem Durchflußreaktor L2 austretende Flüssigkeit noch eine verhältnismäßig hohe Temperatur hat. Dies bewirkt sehr wahrscheinlich nicht nur eine rasche Umsetzung der aufgeschlossenen Probe mit dem Reduktionsmittel, sondern wegen der günstigen Lage des Gas-Flüssigkeit-Lösungsgleichgewichtes bei der hohen Temperatur auch eine besonders effektive Abtrennung der gasförmigen Reduktionsprodukte von der Trägerflüssigkeit durch den Inertgasstrom.

Das vorstehend beschriebene Fließinjektionssystem ist mit Vorteil für die Bestimmung beispielsweise des Gesamtarsens in einer Probe verwendbar. Es besteht dabei das Problem, daß das Arsen in unterschiedlichen Bindungszuständen, zum Beispiel in verschiedenen Wertigkeiten oder auch in Form arsenorganischer Verbindungen vorliegt und daß diese verschiedenen Arsenverbindungen mit unterschiedlichen Empfindlichkeiten gemessen werden. Beispielsweise ergeben Messungen an Proben, die jeweils 20 $\mu$/l einer Arsenverbindung in Form von dreiwertigem Arsen (Natriummetaarsenit; Merck 6287), fünfwertigem Arsen (Natriumhydrogenarsenattrihydrat; Merck 6284), Dinatriummethylarsinathexahydrat (Pharmapräparat "Arrhenalum") und Natriumdimethylarsinattrihydrat enthalten, bei der konventionellen Hydridatomabsorptionsmessung jeweils die unterschiedlichen Meßkurven 1 bis 4, die in Figur 4A dargestellt sind. Dementsprechend würden bei einer Probe, die mehr als eine dieser Verbindungen enthält, je nach deren Zusammensetzung unterschiedliche Gesamtarsenmengen gefunden werden.

Die nachstehend beschriebenen und in Figuren 4A und 4B beschriebenen Versuche wurden mit einem Perkin-Elmer PE 2100 Atomabsorptionsspektrometer durchgeführt, das mit dem vorgenannten FIAS-200 Fließinjektionssystem mit AS-90 Autosampler, FIA-Mercury/Hydride-Einrichtung und dem vorerwähnten Mikrowellenofen ausgerüstet ist. Die Probenschleife L1, der Durchflußreaktor L2, die Leitungsspule L3 und der Reduktionsdurchflußreaktor L4 enthalten Leitungen aus Polytetrafluorethylen. Die Probenschleife L1 enthält 2 ml Probe für die Quecksilberbestimmung und 1 ml Probe für die Bestimmung von Hydridbildnern; der Durchflußreaktor L2 hat eine Gesamtlänge von 10,2 m, die Leitungsspule L3 eine solche von 2,3 m und der Reduktionsdurchflußreaktor L4 eine solche von 10 cm (100 cm für die Bestimmung von Selen); die Fördergeschwindigkeit beträgt 8,5 ml/min für den Trägerflüssigkeitsstrom. Unter den gegebenen Umständen beträgt die Gesamtverweilzeit der Trägerflüssigkeit mit der mit dem Aufschlußmittel versetzten Probe im Mikrowellenofen MWD 46 s, wobei die Verweilzeit im Bestrahlungshohlraum nur 6,3 s beträgt. Eine Überhitzung ist unter diesen Umständen ausgeschlossen.

Der Aerosolabscheider F enthält für die Quecksilberbestimmung nach der Amalgammethode ein Glasfaserfilter (Sartorius SM 134 00-50S) und für die Bestimmung von Hydridbildnern eine Polytetrafluorethylenmembran (Micropore 0,2 mu, SU 7429, Gore-Tex).

Als Aufschlußmittel für die arsenhaltigen Proben diente eine alkalische Kaliumperoxodisulfatlösung (2 Gew.-% in 0,4 M NaOH) Zur Bestimmung von Wismut wird als Aufschlußmittel eine Bromat/Bromidlösung in verdünnter Salzsäure (2,67 mM Kaliumbromat und 13,4 mM Kaliumbromid in 2 M HCl) empfohlen. Für die Bestimmung von Zinn empfiehlt sich eine ähnliche Bromat/Bromidlösung (2,67 mM Kaliumbromat und 13,4 mM Kaliumbromid in 0,01 M HCl mit 1% Weinsäure) oder eine saure Peroxodisulfatlösung (1 Gew.-% Kaliumperoxodisulfat in Schwefelsäure (0,05 Vol.-%) mit 1 % Weinsäure) als Aufschlußmittel, für Blei ebenfalls eine saure Peroxodisulfatlösung (0,4 M Ammoniumperoxodisulfat, 0,015 N Salpetersäure, 0,01 M Essigsäure) und für Quecksilber eine saure Bromat/Bromidlösung (1,33 mM Kaliumbromat, 6,72 mM Kaliumbromid in Salzsäure (3,2 Vol.-%) mit Stabilisator, nämlich 50 mg/l Kaliumdichromat in 0,33 % Vol.-% Salpetersäure).

Bei Verwendung des vorstehend beschriebenen Fließinjektionssystems treten die vorerwähnten Schwierigkeiten infolge unterschiedlicher Bindungszustände des Arsens nicht auf. In Figur 4B sind die mit den vorgenannten einzelnen Arsenverbindungen erhaltenen Meßkurven dargestellt, und man erkennt, daß alle untersuchten Arsenverbindungen annähernd gleiche Meßkurven ergeben. Tatsächlich fällt eine Meßkurve einer Probe, die alle vorgenannten Arsenverbindungen in der gleichen Gesamtmenge enthält, in den Bereich der abgebildeten Meßkurven und ist praktisch davon nicht oder kaum zu unterscheiden. Das Fließinjektionssystem erlaubt daher auch genaue Gesamtbestimmungen von Elementen, die in der Probe gemeinsam in unterschiedlichen Bindungszuständen vorliegen.

**Patentansprüche**

1. System zum Aufschliessen von Proben und zur Probenaufgabe der aufgeschlossenen Proben in ein Analysengerät, enthaltend

(a) einen Mikrowellenofen (MWD) mit einem Bestrahlungshohlraum und einem Durchflussreaktor (2), welcher einen Einlass und einen Auslass aufweist,

(b) Pumpenmittel (P2) zum Hindurchpumpen eines Gemisches von Probe und einem Aufschlussmittel durch den Durchflussreaktor (L2)

(c) wobei der Auslass des Durchflussreaktors (L2) an Probeneinlassmittel eines Analysengerätes anschliessbar ist,

**dadurch gekennzeichnet, dass**

(d) der Durchflussreaktor (L2) einen Leitungsträger (1) und eine daran vorgesehene Durchflussleitung aufweist, und

(e) diese Durchflussleitung einen ersten Bereich aufweist, der in den Bestrahlungshohlraum ragt und einen zweiten Bereich, der ausserhalb des Bestrahlungshohlraumes liegt.

2. System nach Anspruch 1, **dadurch gekennzeichnet, dass** die Durchflussleitung eine Leitungswicklung um den Leitungsträger (1) herum bildet.

3. System nach Anspruch 1, **gekennzeichnet durch**

eine Ballast-Leitungswicklung (L3), die zusätzlich zu dem Durchflussreaktor in dem Bestrahlungshohlraum angeordnet ist, und

Pumpenmittel (P3) zum Hindurchpumpen einer mikrowellenabsorbierenden Flüssigkeit durch die Ballast-Leitungswicklung.

4. System nach Anspruch 2, **dadurch gekennzeichnet, dass**

ein Bündel von Mikrowellenstrahlung in den besagten Mikrowellenofen (MWD) den Bestrahlungshohlraum im wesentlichen längs einer ersten Achse (a-b) bestrahlt, und

die Leitungswicklung des Durchflussreaktors (L2) um eine Achse gewickelt ist, die parallel zu der ersten Achse (a-b) ist, wodurch die Leitung dieser Leitungswicklung im wesentlichen quer zu der ersten Achse (a-b) verläuft.

5. System nach Anspruch 4, **dadurch gekennzeichnet, dass** der Leitungsträger (1) ein langgestreckter Körper ist, der sich längs einer zweiten Achse (c-d) senkrecht zu der ersten Achse (a-b) erstreckt, und die Leitungswicklung in Längsrichtung auf diesen langgestreckten Körper aufgewickelt ist, wodurch der überwiegende Teil der Durchflussleitung parallel zu der zweiten Achse (c-d) verläuft.

6. System nach Anspruch 3, **dadurch gekennzeichnet, dass** ein Bündel von Mikrowellenstrahlung in den besagten Mikrowellenofen (MWD) den Bestrahlungshohlraum im wesentlichen längs einer ersten Achse (a-b) bestrahlt, und
die Ballast-Leitungswicklung (L3) um eine zweite Achse (c-d) gewickelt ist, die senkrecht zu der ersten Achse (a-b) verläuft, wodurch sich ein überwiegender Teil der Ballast-Leitungswicklung (L3) längs des Bündels von Mikrowellenstrahlung erstreckt.

7. System nach Anspruch 5, **dadurch gekennzeichnet, dass**
(a) der langgestreckte Leitungsträger (1) senkrecht zu der zweiten Achse (c-d) einen allgemein rechteckigen Querschnitt aufweist,
(b) der Leitungsträger (1) längs der zweiten Achse einen Abschnitt aufweist, in welchem der Querschnitt verringerte Abmessungen besitzt,
(c) die in Längsrichtung verlaufende Leitungswicklung des Durchflussreaktors (L2) den Abschnitt mit verringerten Abmessungen überbrückt und
(d) die Ballast-Leitungswicklung (L3) um diesen Abschnitt mit verringerten Abmessungen innerhalb der Leitungswicklung des Durchflussreaktors (L2) herumgewickelt ist.

8. System nach Anspruch 1, **dadurch gekennzeichnet, dass** der Leitungsträger (1) aus Polytetrafluorethylen besteht.

9. System nach Anspruch 1, **dadurch gekennzeichnet, dass** der Mikrowellenofen (MWD) programmierbare Einstellmittel zum Einstellen der Heizleistung und der Heizdauer ist.

10. System nach Anspruch 1, **dadurch gekennzeichnet, dass** das Analysengerät ein Atom-Spektrometer (AAS) ist.

11. System nach Anspruch 1, **dadurch gekennzeichnet, dass** das Analysengerät ein Atomabsorptions-Spektrometer ist.

12. System nach Anspruch 10, **gekennzeichnet durch**
(a) einen Reduktions-Durchflussreaktor (L4) mit einem Einlass und einem Auslass, wobei der Einlass des Reduktions-Durchflussreaktors (L4) mit dem Auslass des Durchflussreaktors (L2) im Mikrowellenofen (MWD) in Verbindung steht, und
(b) Mittel (P2) zur Zuführung eines Reduktionsmittels zu dem Einlass des Reduktions-Durchflussreaktors (L4), wobei der Auslass des Reduktions-Durchflussreaktors (L4) mit Probeneinlassmitteln des Atom-Spektrometers verbindbar ist.

13. System nach Anspruch 12, **gekennzeichnet durch** Mittel zum Zuführen eines Inertgasstromes (Ar) zu dem Reduktions-Durchflussreaktor (L4).

14. System nach Anspruch 13, **gekennzeichnet durch** einen zwischen den Auslass des Reduktions-Durchflussreaktors und die Probeneinlassmittel eingeschalteten Aerosolabscheider (GLS).

15. System nach Anspruch 14, **gekennzeichnet durch** einen Quecksilberadsorber, der zwischen den Aerosolabscheider (GLS) und die Probeneinlassmittel eingeschaltet ist.

16. System nach Anspruch 1, **gekennzeichnet durch** Fliessinjektionsmittel (L1) zum Injizieren von Probenflüssigkeit in eine Strömung von Trägerflüssigkeit, wobei diese Strömung von Trägerflüssigkeit durch die Pumpenmittel (P2) durch den Durchflussreaktor (L2) hindurchgepumpt wird.

Fig. 1

$$\Delta T = \frac{14.33 \times P}{F}$$

Fig. 2

EP 0 507 169 A2

Fig.3B

L2    L3    1

a — — — b

c

Fig.3A

1

I

L3

II

2

L2

d

Fig. 4B

Fig. 4A